(19) Europäisches Patentamt
European Patent Office
Office européen des brevets

(11) Veröffentlichungsnummer : **0 324 845 B1**

(12) **EUROPÄISCHE PATENTSCHRIFT**

(45) Veröffentlichungstag der Patentschrift :
03.04.91 Patentblatt 91/14

(51) Int. Cl.$^5$ : **B01D 53/34**

(21) Anmeldenummer : **88907227.8**

(22) Anmeldetag : **19.08.88**

(86) Internationale Anmeldenummer :
**PCT/DE88/00511**

(87) Internationale Veröffentlichungsnummer :
**WO 89/01820 09.03.89 Gazette 89/06**

(54) **VERFAHREN ZUR ENTSCHWEFELUNG VON RAUCHGASEN AUS KRAFTWERKSKESSELFEUERUNGEN.**

(30) Priorität : 22.08.87 DE 3728128

(43) Veröffentlichungstag der Anmeldung :
26.07.89 Patentblatt 89/30

(45) Bekanntmachung des Hinweises auf die
Patenterteilung :
03.04.91 Patentblatt 91/14

(84) Benannte Vertragsstaaten :
AT BE CH DE FR GB IT LI LU NL SE

(56) Entgegenhaltungen :
DE-A- 2 415 693
DE-A- 2 901 637
DE-A- 3 334 106
DE-A- 3 541 323

(73) Patentinhaber : Hölter, Heinz, Dipl.-Ing.
Beisenstrasse 39-41
W-4390 Gladbeck (DE)

(72) Erfinder : GEBHARD, Georg
Oberwehnrath
W-5226 Reichshof 1 (DE)
Erfinder : UERPMANN, Ernst-Peter
Hufelandstrasse 5
W-4300 Essen (DE)

(74) Vertreter : Becker, Thomas, Dr., Dipl.-Ing. et ai
Patentanwälte Becker & Müller
Eisenhüttenstrasse 2
W-4030 Ratingen 1 (DE)

## Beschreibung

Die Erfindung bezieht sich gattungsgemäß auf ein Verfahren zur Naßentschwefelung von Rauchgasen aus Kraftwerkskesselfeuerungen, wobei die Rohgase, die Schwefeldioxid sowie unter anderem Chloridionen und einen Restsauerstoffgehalt aufweisen, in einen Waschturm eingeführt sowie in diesem mit einem calcium- haltigen Absorptionsmittel behandelt werden und bei dem die am Boden des Waschturms gesammelte Waschwassersuspension im Kreislauf teilweise wieder in den Waschturm zurückgeführt und der gebildete, hauptsächlich Calciumsulfatprodukte enthaltende Entschwefelungsschlamm teilweise aus dem Kreislauf abgezogen wird.

Bei dem aus der Praxis bekannten gattungsgemäßen Verfahren reicht der Restsauerstoffgehalt in den Rohgasen, der etwa 2 bis 10 Volumenprozent betragen kann, nicht aus, um die Oxidation (dort über Calciumsulfit zu Calciumsulfat) zu bewirken. Diese Oxidation muß vielmehr in einer besonderen Oxidationsstufe im Unterteil des Waschturms durchgeführt werden, in den Oxidationsluft mit Hilfe besonderer Gebläse eingeführt wird. Abgesehen von dem erheblichen Installationsaufwand der Gebläse weist dieses Verfahren den Nachteil auf, daß für die Gebläse große elektrische Energien notwendig sind, was das Entschwefelungsverfahren verteuert.

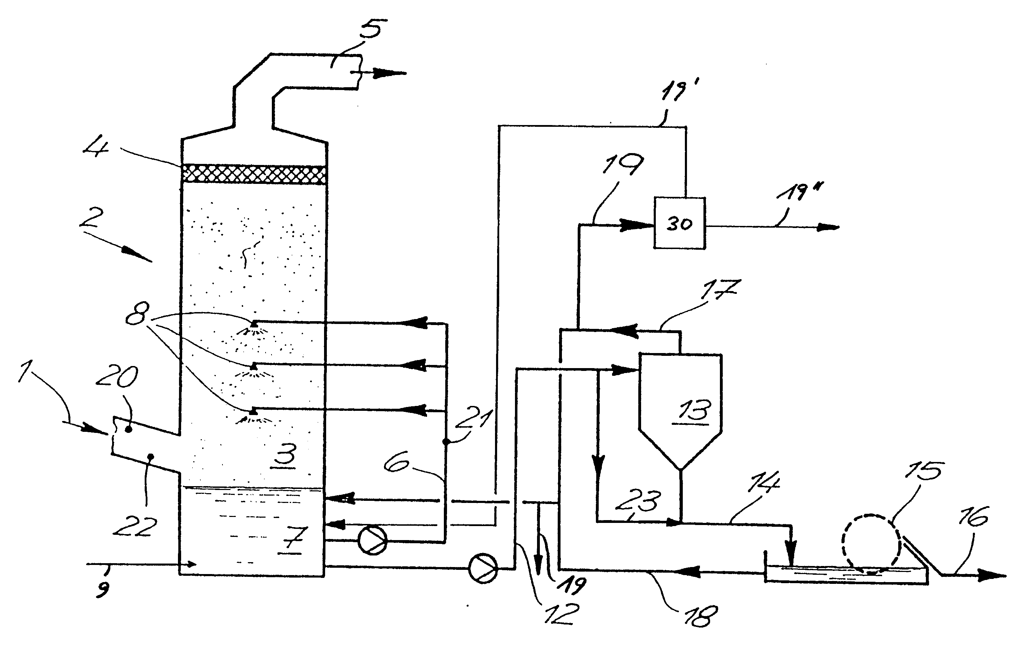

Grundsätzlich ist es bekannt (VGB Kraftwerkstechnik, 1983, 336, Bild 2 und Beschreibung dazu), bei der Rauchgasentschwefelung eine Oxidation mit Hilfe des Restsauerstoffes in den Rohgasen durchzuführen. Dabei wird zunächst in einem Absorber das Schwefeldioxid in einer kalkfreien Waschflüssigkeit zu schwefeliger Säure gelöst und diese oxidiert. Danach erst wird die entstandene Schwefelsäure mit Kalkmilch neutralisiert. Es ist offensichtlich, daß auch dieses mehrstufige Verfahren relativ aufwendig ist.

Bei dem gattungsgemäßen Verfahren gilt bisher eine besondere Oxidationsstufe mit Oxidationslufteinblasung als unverzichtbar.

Der Erfindung liegt die Aufgabe zugrunde, das gattungsgemäße Verfahren so zu führen, daß eine besondere Oxidationsstufe und die aufwendige Einführung von Oxidationslüft in den unteren Bereich des Waschturms mit Hilfe von besonderen Oxidationsluftgebläsen nicht mehr erforderlich ist.

Zur Lösung dieser Aufgabe lehrt die Erfindung, bei einem Restsauerstoffgehalt in den Rohgasen von mindestens 2 Volumenprozent die Waschwassersuspension auf einen Eindickungsgrad, ausgedrückt durch das Verhältnis der Chloridionen-Konzentration der wässrigen Phase der Waschwassersuspension in mg/m³ zur Chloridionen-Konzentration der aufgegebenen Rohgase in mg/m³ auf einen Wert von mindestens 10000 einzustellen.

Durch den genannten Eindickungsgrad in Kombination mit den erwähnten Restsauerstoffgehalten in den Rauchgasen wird erreicht, daß die Bildung von Calciumsulfatprodukten ausschließlich mit dem Rescteauerstoffgehalt in den Rohgasen (das heißt ohne Einführung von Oxidationsluft in den Waschturm mit Hilfe von Oxidationsluftgebläsen) erfolgt. Die dabei ablaufenden Vorgänge sind im einzelnen noch nicht geklärt. Vermutlich läuft die Reaktion direkt zu Calciumsulfat beziehungsweise dessen Hydraten. Es versteht sich, daß der pH-Wert in der Waschwassersuspension im sauren Bereich, vorzugsweise im Bereich von 5,0 bis 5,6 liegt.

Der Eindickungsgrad wird erfindungsgemäß ausgedrückt durch das Verhältnis der Chloridionen-Konzentration der wässrigen Phase der Waschwassersuspension in mg/m³ zur Chloridionen-Konzentration der aufgegebenen Rohgase (Rauchgase) in mg/m³. Dabei stellt die Chloridionen-Konzentration nur eine besonders leicht meßbare Bezugsgröße dar, da die fossilen Brennstoffe und insbesondere Kohle regelmäßig Chlorverbindungen enthalten, so daß die Chloridionen auch in die Waschwassersuspension gelangen. Ihre Konzentration läßt sich sowohl im Rauchgas als auch in der Waschwassersuspension leicht messen. Bei Bedarf kann die Eindickung auch durch andere Bezugsgrößen ermittelt werden. Die Aufkonzentration der Waschwassersuspension führt nämlich auch zu einer Aufkonzentration anderer, in der Waschwassersuspension enthaltener Stoffe. Beispielhaft seien hier Calcium-, Natrium- oder Magnesium- fluoride, -Bromide, -Jodide oder die verschiedenen in der Waschsuspension enthaltenen Nitrite und Nitrate sowie adsorptiv beziehungsweise katalytisch wirksame feinteilige Silikate genannt. Auch über diese Inhaltsstoffe können entsprechende Verhältniszahlen zur Bestimmug des Eindickungsgrades, wie anhand der Chloridionen-Konzentration definiert, ermittelt werden.

Die genannten Eindickungsgrade führen in der Praxis zu Chlorid-Konzentrationen von 8 bis 40 g/l in der Waschwassersuspension, je nach Provenienz der fossilen Brennstoffe.

Arbeitet man mit der beschriebenen Eindickung, so reichen Restsauerstoffgehalte von mehr als etwa 2 Volumenprozent im Rohgas bereits aus. Dies sind Restsauerstoffgehalte, wie sie heute in solchen Rauchgasen vorkommen, die aus Anlagen stammen, bei denen feuerungstechnische Maßnahmen zur Stickoxidreduzierung im Kessel durchgeführt werden. Bisher hatte man bei derart niedrigen $O_2$-Werten ebenso wie bei sonst üblichen Sauerstoffgehalten von Rauchgasen von etwa 5 bis 10 Volumenprozent, eine in-situ-Oxidation der $SO_2$ der Rauchgase zu $CaSO_4$-Produkten für ausgeschlossen gehalten. Durch die beschriebene Eindickung wird dies jetzt jedoch überraschenderweise möglich.

Bei Bedarf lassen sich die Restsauerstoffgehalte durch Einstellung der Verbrennungsluft auch beeinflussen. Im Rahmen der Erfindung liegt es daher, dem Rauchgas vor Eintritt in den Waschturm Fremdluft zur Einstellung des Restsauerstoffgehaltes beizugeben. Diese kann über geeignete strömungstechnische Maßnahmen von dem Rohgasstrom selbst angesaugt werden.

Die Oxidation des $SO_2$ der Rauchgase zur Bildung von Calciumsulfat/(produkten) kann im Rahmen der Erfindung so weit getrieben werden, daß der abgezogene Entschwefelungsschlamm Calciumsulfit in einer Menge von 0,5 Gewichtsprozent oder weniger aufweist. Gegebenenfalls erfolgt die Eindickung auch in einem, dem Hauptwäscher nachgeschalteten Suspensionskreislauf. Ebenso können die Salze oder suspendierten Feinstteilchen auch gezielt separat der Suspension zugegeben werden.

Wie oben ausgeführt, soll erfindungsgemäß der Wäscher mit einer hohen Konzentration an gelösten und suspendierten Bestandteilen betrieben werden. Der gewünschte Eindickungsgrad wird dabei vorzugsweise durch eine Zirkulation der Waschwassersuspension im Waschturm (Absorber) eingestellt, wobei jeweils eine Teilmenge der Waschsuspension dem Wäscher (Absorber) entnommen und außerhalb des Wäschers die wässrige Phase mit den Feinbestandteilen der Waschsuspension von den groben Feststoffteilen (gebildeten Calciumsulfatprodukten) getrennt und die wässrige Phase anschließend wieder in den Wäscher zurückgeführt werden kann. Durch diesen Kreislauf wird die Chlorid- oder ganz allgemein Konzentration der reaktiven Feinteile in der Waschwassersuspension bis auf die genannten Werte erhöht. Bei Erreichen der genannte Eindickungsgrade findet dann die angestrebte in-situ-Oxidation statt.

Als Absorptionsmittel wird erfindungsgemäß vorzugsweise Kalkstein ($CaCO_3$) oder Kalk in Form von Calciumoxid (CaO) oder Calciumhydroxid ($Ca(OH)_2$) vorgeschlagen. Ebenso eignen sich aber Dolomit ($CaCO_3 \cdot MgCO_3$) beziehungsweise dessen Oxide oder Hydroxide als Absorptionsmittel, wobei der Eindickungsgrad auch hier entsprechend eingestellt wird, bei Verwendung der letztgenannten Absorptionsmittel aber eher an der unteren Grenze liegt, während bei Verwendung von Kalkstein oder Kalk als Absorptionsmittel die Eindickungsgrade vorzugsweise auch deutlich höher als 10000 eingestellt werden, zum Beispiel auf Werte von mehreren Millionen.

Das Verfahren wird im üblichen Temperaturbereich eines Absorbers zwischen 45 und 75 Grad Celsius durchgeführt.

Kombiniert man die Verfahrensparameter
– Eindickung der Waschwassersuspension : 8 bis 40 g/l Chlorid
– Schwefeldioxidgehalt im Rohgas : bis 6000 mg/m³
– pH-Wert in der Waschwassersuspension : 5,0 bis 5,6

– Restsauerstoffgehalt im Rohgas : 2 bis 6 Volumenprozent
so arbeitet man mit hohem Entschwefelungsgrad funktionssicher.

Liegt er Anteil der Chloridionen im Rohgas sehr hoch, so kann es zweckmäßig sein, die Entschwefelung mehrstufig durchzuführen und das erfindungsgemäße Verfahren erst in einer nachgeschalteten Stufe zu verwirklichen, in der der Chloridionengehalt im Rohgas bereits ausreichend reduziert ist.

In diesem Zusammenhang wird auch vorgeschlagen, dem Wäscher einen an sich bekannten Vorwäscher vorzuschalten, damit die für die in-situ Bildung von Calciumsulfatprodukten wesentlichen Bestandteile der Suspension ausreichend aufkonzentriert werden können.

Im folgenden wird die Erfindung anhand einer, ein Ausführungsbeispiel darstellenden Zeichnung ausführlich erläutert. Die einzige Figur zeigt das Verfahrensschema sowie die wesentlichen Komponenten einer Anlage zur Durchführung des erfindungsgemäßen Verfahrens.

Das in der Figur dargestellte Verfahren dient zum Herstellen von im wesentlichen aus Calciumsulfatdihydrat bestehendem Rauchgasgips im Zuge der nassen Rauchgasentschwefelung von Kraftwerkskesselfeuerungen.

Das Rohgas 1 wird einem Waschturm (Absorber) 2 zugeführt und im Gegenstrom mit einer das Absorptionsmittel enthaltenden Waschwassersuspension 3 behandelt. Dabei wird das im Rohgas enthaltene Schwefeldioxid ausgewaschen. Das von $SO_2$ befreite Rohgas tritt nach einer Tropfenabscheidung 4 am Waschturmkopf 5 aus. Die Waschwassersuspension wird in einem ersten Kreislaufstrom 6 aus dem Waschturmsumpf 7 abgezogen und über höhenmäßig versetzt angeordnete Zerstäuberdüsen 8 dem Waschturm aufgegeben. Im Ausführungsbeispiel wird Kalkstein als Absorptionsmittel in Form einer wässrigen Aufschlämmung über eine Leitung 9 in den Sumpf 7 des Waschturmes 2 eingeleitet.

Aus dem Waschturmsumpf 7 wird ein Kristallsuspensionsstrom 12 abgezogen und einem Zyklonabscheider 13 zugeführt. In dem Zyklonabscheider werden Calciumsulfatdihydrat-Kristalle, die größer sind als das dem Zyklonabscheider zugeordnete Trennkorn, abgetrennt und als Kristallschlamm im Unterlauf 14 des Zyklonabscheiders 13 ausgeführt. Im Ausführungsbeispiel ist angenommen, daß der Zyklonabscheider mit einem Trennkorndurchmesser im Bereich von 10 bis 20 µm betrieben wird, wobei Feststoffteilchen, die dem Trenkorndurchmesser entsprechen, definitionsgemäß zu gleichen Anteilen in den Oberlauf und in den Unterlauf gelangen. Der Kristallschlamm wird in einer nachgeschalteten Entwässerungseinheit 15, beispielsweise einem Vakuumtrommelfilter, mechanisch entwässert und als Rauchgasgips 16 abgezogen. Der Oberlauf 17 des Zyklonabscheiders sowie das bei der mechanischen Entwässerung des Kristallschlamms anfallende Filtrat 18 werden in den Waschturmsumpf 7 zurückgeführt. Über die Leitungen 19 kann jeweils ein Teilstrom abgezogen werden. Auf diese Weise wird die Menge der über die Leitungen 17, 18 dem Wäschersumpf 7 zugeführten wässrigen Phase und damit die Eindickung gesteuert beziehungsweise geregelt.

Darüber hinaus kann der abgezogene Teilstrom 19 noch weiter differenziert werden. Zum Beispiel kann ein Feststoffabscheider 30 in die Leitung 19 eingesetzt werden, mit dem der Stoffstrom in unterschiedliche Feststofffraktionen 19', 19'' unterteilt und die eine oder andere anschließend in den Wäscher zurückgeführt wird. Zur Einstellung der Eindickung kann auch der Zyklonenabscheider 13 über 23 kurzgeschlossen werden.

Die Menge der Feinanteile im Waschturmsumpf 7 ist so eingestellt, daß mindestens 10 Gewichtsprozent, vorzugsweise 20 bis 70 Gewichtsprozent der mitgeführten Feststoffe im Oberlauf 17 des Zyklonabscheiders 13 bleiben. Sie werden im wesentlichen als Kristallkeime in den Waschturmsumpf 7 zurückgeführt. Im Ergebnis läßt sich auf diese Weise die Eindickung der Waschwassersuspension steuern. Dabei werden auch die gelösten Anteile eingedickt, das heißt ihre Konzentration wird erhöht. Folglich kann die Chloridionenkonzentration als Steuerungsparameter eingesetzt werden. Dazu wird bei 20 die Chloridionenkonzentration im Rauchgas, bei 21 die Chloridionenkonzentration in der Waschwassersuspension gemessen. Der Quotient wird wie definitionsgemäß angegeben kontrolliert und gehalten. Der Sauerstoffgehalt im Rohgas wird bei 22 gemessen. Liegt er über 2 Volumenprozent, so enthält der bei 14 abgezogene Entschwefelungsschlamm weniger als 0,5 Gewichtsprozent Calciumsulfit.

## Ansprüche

1. Verfahren zur Naßentschwefelung von Rauchgasen aus Kraftwerkskesselfeuerungen, wobei die Rohgase, die Schwefeldioxid sowie unter anderem Chloridionen und einen Restsauerstoffgehalt aufweisen, in einen Waschturm eingeführt sowie in diesem mit einem calcium- haltigen Absorptionsmittel behandelt werden und die am Boden des Waschturms gesammelte Waschwassersuspension im Kreislauf teilweise wieder in den Waschturm zurückgeführt und der gebildete, hauptsächlich Calciumsulfatprodukte enthaltende Entschwefelungsschlamm teilweise aus dem Kreislauf abgezogen wird, dadurch gekennzeichnet, daß zur Oxidation des im Rauchgas enthaltenen $SO_2$ bei einem Restsauerstoffgehalt im Rohgas von mindestens 2 Volumenprozent die Waschwassersuspension auf einen Eindickungsgrad, ausgedrückt durch das Verhältnis der Chloridionen-Konzentration der wässrigen Phase der Waschwassersuspension in mg/m³ zur Chloridionen-Konzentration der aufgegebenen Rohgase in mg/m³ auf einen Wert von mindestens 10000 eingestellt wird.

2. Verfahren nach Anspruch 1, dadurch gekennzeichnet, daß der Eindickungsgrad auf einen Wert von mindestens 50000 eingestellt wird.

3. Verfahren nach Anspruch 1 oder 2, dadurch gekennzeichnet, daß mit einem Restsauerstoffgehalt der in den Waschturm eintreten Rohgase von mindestens 4 Volumenprozent gearbeitet wird.

4. Verfahren nach einem der Ansprüche 1 bis 3, dadurch gekennzeichnet, daß den Rohgasen vor Eintritt in den Waschturm Fremdluft zur Einstellung des Restsauerstoffgehaltes beigegeben wird.

5. Verfahren nach einem der Ansprüche 1 bis 4, dadurch gekennzeichnet, daß als Absorptionsmittel Kalkstein oder Kalk in Oxidform oder Hydroxidform eingesetzt wird.

6. Verfahren nach einem der Ansprüche 1 bis 5, dadurch gekennzeichnet, daß die Oxidationsbehandlung des $SO_2$ solange geführt wird, bis der Gehalt des abgezogenen Entschwefelungsschlamms 0,5 Gewichtsprozent oder weniger Calciumsulfit enthält.

7. Verfahren nach einem der Ansprüche 1 bis 6, dadurch gekennzeichnet, daß der Rauchgasstrom einen Vorwäscher zur Reduzierung des Chloridionengehaltes durchläuft, bevor er in den Hauptwäscher zur Entschwefelung gelangt.

## Claims

1. Process for the wet desulfurization of flue gases from power plant boiler furnaces, in which the crude gases, which include sulfur dioxide and, among others, chlorine ions and a residual oxygen content, are introduced into a wash tower and, once in the wash tower, are treated with a calcium containing absorption agent, and the wash water suspension collected at the bottom of the wash tower is partially led back into the wash tower in the circulation and the desulfurization sediment formed, containing essentially calcium sulfate products, is partially drawn out of the circulation, characterized by the fact that to oxidize $SO_2$ from the flue gas, the wash water suspension, with a residual oxygen content of at least 2 percent by volume in the crude gas, is adjusted at a concentration level, expressed by the relation of the chloride ion concentration in mg/m³ of the aqueous phase of the wash water suspension to the chloride ion concentration in mg/m³ of the crude gases charged, to a value of at least 10,000.

2. Process according to Claim 1, characterized by the fact that the concentration level is regulated at a value of at least 50,000.

3. Process according to Claim 1 or 2, characterized by the fact that work is done with a residual oxygen content of at least 4 percent by volume of the crude gases that have entered the wash tower.

4. Process according to one of Claims 1 through 3, characterized by the fact that new air is added to the crude gases before introduction into the wash tower, to adjust the residual oxygen content.

5. Process according to one of Claims 1 through 4, characterized by the fact that limestone or calcium in oxide form or hydroxide form is employed as an absorption agent.

6. Process according to one of Claims 1 through 5, characterized by the fact that the oxidation treatment of the $SO_2$ is continued until the content of the desulfurization sediment drawn off contains 0.5 percent by weight or less calcium sulfite.

7. Process according to one of Claims 1 through 6, characterized by the fact that the flue gas stream runs through a prewasher to reduce the amount of chlorine ions before it arrives in the main washer for desulfurization.

## Revendications

1. Procédé de désulfuration par voie humide de gaz de fumée provenant de foyers de chaudières d'usine génératrices, les gaz bruts, qui présentent du dioxyde de sulfure ainsi qu'entre autres des ions de chlorure et un taux d'oxygène résiduel, étant introduits dans une tour de lavage et étant traités dans celle-ci avec un produit absorbant calcique et la suspension d'eau de lavage collectée sur le fond de la tour de lavage dans le cycle étant partiellement ramenée dans la tour de lavage et la boue de désulfuration formée, qui contient principalement des produits à base de sulfate de calcium, étant partiellement retirée du cycle, caractérisé en ce que, pour l'oxydation du $SO_2$ contenu dans le gaz de fumée, le taux d'oxygène résiduel dans le gaz brut étant d'au moins 2 pour-cent volumétriques, la suspension d'eau de lavage est ajustée à un degré d'épaississement d'une valeur d'au moins 10000 exprimé par le rapport de la concentration en ions de chlorure de la phase aqueuse de la suspension d'eau de lavage en mg/m³ avec la concentration en ions de chlorure des gaz bruts en mg/m³, qui ont été chargés.

2. Procédé selon la revendication 1, caractérisé en ce que le degré d'épaississement est ajusté à une valeur d'au moins 50000.

3. Procédé selon la revendication 1 ou 2, caractérisé en ce que l'on travaille avec un taux d'oxygène résiduel des gaz bruts introduits dans la tour de lavage d'au moins 4 pour-cent volumétriques.

4. Procédé selon l'une des revendications 1 à 3, caractérisé en ce que de l'air étranger est ajouté aux gaz bruts avant leur entrée dans la tour de lavage pour ajuster le taux d'oxygène résiduel.

5. Procédé selon l'une des revendications 1 à 4, caractérisé en ce que l'on utilise du calcaire ou de la chaux de forme oxyde ou hydroxyde comme produit absorbant.

6. Procédé selon l'une des revendications 1 à 5, caractérisé en ce que le traitement par oxydation du $SO_2$ est poursuivi jusqu'à ce que la teneur de la boue de désulfuration enlevée contient 0,5% en poids ou moins de sulfite de calcium.

7. Procédé selon l'une des revendications 1 à 6, caractérisé en ce que le flux de gaz de fumée traverse un laveur primaire pour réduire la teneur en ions de chlorure avant d'arriver au laveur principal pour la désulfuration.